# FASCICULE DE BREVET EUROPEEN

(11) **EP 1 149 729 B1**
(45) Date de publication et mention de la délivrance du brevet: **02.07.2003**
(21) Numéro de dépôt: 01470010.8
(22) Date de dépôt: 11.04.2001
(51) Int. Cl.: B60N 2/02, A47C 9/00, A47C 7/14

(54) **Assise de siège ayant un effet massant, notamment pour véhicule automobile**
Sitzfläche mit massierender Wirkung, insbesondere für Kraftfahrzeuge.
Seat portion having a massage effect, in particular for a car seat

(30) Priorité: 27.04.2000 FR 0005557
(43) Date de publication de la demande: 31.10.2001
(73) Titulaire: FAURECIA SIEGES D'AUTOMOBILE S.A., 92100 Boulogne-Billancourt (FR)
(72) Inventeur: Fourrey, Francois, 45120 Corquilleroy (FR); Liaigre, Laurent, 77380 Combs la Ville (FR)
(74) Mandataire: Bentz, Jean-Paul

(56) Documents cités:
- US-A- 5 022 385
- US-A- 5 127 708
- US-A- 5 320 409
- US-A- 5 913 568

## Description

La présente invention concerne les sièges, notamment mais non exclusivement de véhicules automobiles, et plus particulièrement dans ce cas les sièges avant, du type comportant dans le coussin d'assise des moyens destinés à procurer un effet de massage de l'utilisateur.

On connaît déjà des sièges comportant dans leurs assises des dispositifs créant des vibrations ou des oscillations verticales, transversales ou longitudinales, dans le but de transmettre ces mouvements par l'intermédiaire de la matelassure de l'assise à l'utilisateur, pour provoquer un effet de massage.

Ces dispositifs répondent en particulier au souhait déjà exprimé de créer un massage sous-cutané ascendant sous les cuisses pour éviter les fourmillements pouvant survenir lors de longues périodes de conduite.

Par ailleurs la nécessité de respecter un empilage correct des vertèbres inférieures est bien connue de manière générale, et l'on sait aussi l'intérêt d'entretenir des micro-mouvements de la colonne vertébrale.

Les dispositifs connus permettent de répondre au moins en partie à ces souhaits. Mais aucun de ces dispositifs ne permet de corriger une mauvaise position initiale ou progressivement acquise par exemple par un glissement du bassin vers l'avant.

La présente invention a pour objectif de résoudre ce problème et vise en particulier à remettre en place correcte le bassin de l'utilisateur, à la demande ou quasi automatiquement, tout en assurant un effet complémentaire de massage alternatif ascendant sous les cuisses et de légers mouvements de la partie inférieure de la colonne vertébrale.

Avec ces objectifs en vue, l'invention a pour objet une assise de siège de véhicule automobile comportant un cadre d'armature portant une nappe de suspension, et des moyens pour créer des mouvements oscillatoires au niveau de l'assise, caractérisée en ce que la nappe de suspension est réalisée en deux parties séparées au niveau d'un plan vertical médian séparant le siège en un côté droit et un côté gauche, chaque partie de la nappe étant reliée à des moyens spécifiques de génération dans chaque partie de la nappe d'un mouvement cyclique comportant, dans une partie supérieure de sa course, une translation vers l'arrière, et en ce qu'elle comporte des moyens de commande pour générer les dits mouvements avec un déphasage angulaire entre les deux parties.

Le mouvement vers l'arrière de chaque partie de la nappe lorsqu'elle est dans une position supérieure provoque un effet d'entraînement correspondant vers l'arrière, c'est à dire vers le dossier du siège, de la zone voisine de l'ischion, c'est-à-dire la fesse qui repose sur la dite partie de nappe. Cet effet est d'autant plus marqué que, lorsque l'un des ischions est ainsi soulevé et poussé vers l'arrière par le mouvement de la partie de nappe située du même côté, l'autre ischion se trouve inversement déchargé, facilitant le mouvement de retour vers l'avant de la deuxième partie de nappe, située alors en position inférieure.

Dans les sièges où la nappe de soutien est recouverte par une matelassure, celle-ci est également en deux parties correspondant respectivement à chaque partie de la nappe, dont le mouvement provoque un mouvement similaire de la partie de matelassure qu'elle supporte.

Globalement, chaque ischion se trouve donc cycliquement soumis à un effort dirigé vers l'arrière, pendant que l'autre ne subit qu'un effort beaucoup plus faible vers l'avant, ou même pas d'effort du tout. Il en résulte donc un repositionnement progressif de la partie inférieure du bassin, qui s'accompagne d'un léger balancement latéral du bassin, procurant les micro-mouvements de la colonne vertébrale souhaités et précédemment évoqués. Simultanément encore se produit un effet de massage alternatif sous les cuisses, dirigé vers le haut des cuisses.

L'amplitude du mouvement est bien sûr limitée, pour ne pas créer un déhanchement excessif.

Préférentiellement, le mouvement cyclique est un mouvement de translation sensiblement circulaire autour d'un axe horizontal transversal commun aux moyens de générations dudit mouvement dans chaque partie de la nappe, le sens de rotation étant tel que, pendant la partie supérieure de la course, le déplacement s'effectue vers l'arrière.

Préférentiellement aussi, pour obtenir le mouvement souhaité de chaque partie de la nappe, chacune de ces parties est déformable élastiquement dans la direction longitudinale, les deux parties de nappe étant fixées à l'avant sur une même ligne fixe par rapport au cadre d'armature, et à l'arrière sur des vilebrequins respectifs entraînés en rotation de manière à maintenir lors du mouvement un déphasage angulaire de 180°.

A l'arrêt, les deux vilebrequins, ou autres moyens de génération du mouvement cyclique, sont maintenus dans la même position angulaire, c'est-à-dire à la même position du cycle, pour que la partie gauche et la partie droite des nappes soient dans le même plan et vers l'avant, l'ensemble de l'assise étant alors à un même niveau.

Pratiquement, lorsque le mouvement cyclique est arrêté, en particulier lorsque l'usager quitte le siège, le mouvement de chaque partie de la nappe est arrêté lorsqu'elle arrive dans une position sensiblement maximale vers l'avant, l'une des deux demi-nappes arrivant donc dans cette position un demi-cycle plus tard que l'autre.

Ainsi, lorsque le siège est inoccupé, les deux parties de la nappe sont dans cette position avancée. Selon une disposition préférentielle, l'assise du siège comprend des moyens pour, lorsqu'un passager occupe à nouveau le siège, commander une étape préliminaire de positionnement, au cours de laquelle les deux parties de l'assise sont entraînées simultanément vers l'arrière, pour amener le postérieur de l'usager vers l'arrière, dans le but de faciliter dès le départ un bon positionnement, notamment de la colonne vertébrale, tout le bassin étant alors repoussé vers le dossier du siège. A partir de cette position de recul simultané des deux parties de l'assise, le mouvement cyclique déphasé peut redémarrer, automatiquement ou sur commande, le mouvement d'une des deux parties démarrant donc avec un demi-cycle de retard par rapport à l'autre partie.

Les vilebrequins peuvent être entraînés par des moteurs indépendants asservis pour maintenir lors du mouvement le dit déphasage angulaire.

Les vilebrequins peuvent aussi être entraînés par un seul moteur, les deux vilebrequins étant alors liés en rotation entre eux par exemple par un système de butée angulaire permettant d'assurer le dit déphasage angulaire de 180° en rotation dans un sens, mais permettant également de supprimer ce déphasage par un entraînement en rotation du moteur dans l'autre sens, pour revenir à l'arrêt dans la position de repos indiquée ci-dessus.

Typiquement, lorsque la nappe est recouverte d'une matelassure, chaque demi-nappe est formée de fils métalliques pliés en zigzags ou en épingles alternées dans le plan de la nappe, procurant l'élasticité souhaitée de la nappe. Les extrémités situées vers l'avant de ces fils sont toutes liées à un élément fixe de l'armature, sur lequel elles peuvent légèrement pivoter sensiblement sur un axe commun. Les extrémités arrière des fils de nappe étant montées tourillonnantes sur la manivelle d'un vilebrequin, la rotation de ce dernier provoque un déplacement circulaire correspondant des extrémités arrière des demi-nappes, qui se répercute sur l'ensemble de chaque demi-nappe, grâce à leur élasticité, en étant toutefois progressivement réduit vers l'avant de la demi-nappe puisque celle ci est fixe.

Préférentiellement, quand l'assise comporte une matelassure recouvrant la nappe, chaque partie de la matelassure, classiquement formée d'une mousse polyuréthanne par exemple, comporte des fentes transversales, qui permettent d'accroître la capacité de déformation de chaque demi-matelassure, pour mieux suivre les élongations cycliques des demi-nappes sur lesquelles elles reposent.

Préférentiellement aussi, l'assise peut comporter un revêtement d'aspect procurant une adhérence plus forte lorsqu'il est déplacé vers l'arrière que lorsqu'il est déplacé vers l'avant. Un tel revêtement, typiquement du type peau de phoque ou à écailles, permet d'assurer une meilleure adhérence de l'assise sous le postérieur de l'occupant lors du mouvement vers l'arrière, et favorise le glissement lors du mouvement vers l'avant.

Afin d'automatiser le fonctionnement, l'assise comporte préférentiellement des capteurs de pression situés sous la surface de l'assise, pour mesurer la pression exercée par les fesses de l'occupant.

Les capteurs de pression étant disposés de manière à pouvoir mesurer la pression exercée sur la surface d'assise en au moins deux points situés l'un devant l'autre, ils peuvent alors commander un arrêt automatique du ou des moteurs d'entraînement des vilebrequins lorsque la pression mesurée, ou la différence de pression entre un capteur situé le plus en arrière et un autre situé plus en avant, atteint un seuil prédéterminé, signe que le poids de l'occupant du siège est à nouveau réparti sur le siège dans une configuration de confort optimale. De manière similaire, les capteurs peuvent assurer une mise en route automatique s'ils détectent que la zone de plus forte pression s'est déplacée anormalement vers l'avant du siège, et aussi commander le lancement automatique de l'étape préliminaire de positionnement lorsqu'ils détectent l'arrivée d'un occupant, ou la mise automatique en position avancée des deux parties de la nappe lorsqu'ils détectent le départ de l'usager.

Pour assurer ces automatismes, le siège pourra être équipé de moyens de mémorisation de valeurs de la pression ou d'un écart de pression, et de moyens de comparaison des valeurs mesurées par les capteurs avec les valeurs mémorisées, par exemple pour des utilisateurs différents.

D'autres caractéristiques et avantages de l'invention apparaîtront dans la description qui va suivre d'un siège de véhicule automobile, conforme à l'invention.

On se reportera aux dessins annexés dans lesquels :
- la figure 1 est une vue partielle en perspective d'un siège conforme à l'invention, comportant une nappe de suspension portant une matelassure,
- la figure 2 est une vue en coupe longitudinale de l'assise du siège,
- la figure 3 est une vue de dessus des demi-nappes de suspension, dans une position de repos du système.
- les figures 4a à 4d illustrent le mouvement d'une demi-nappe au cours d'un cycle de fonctionnement.

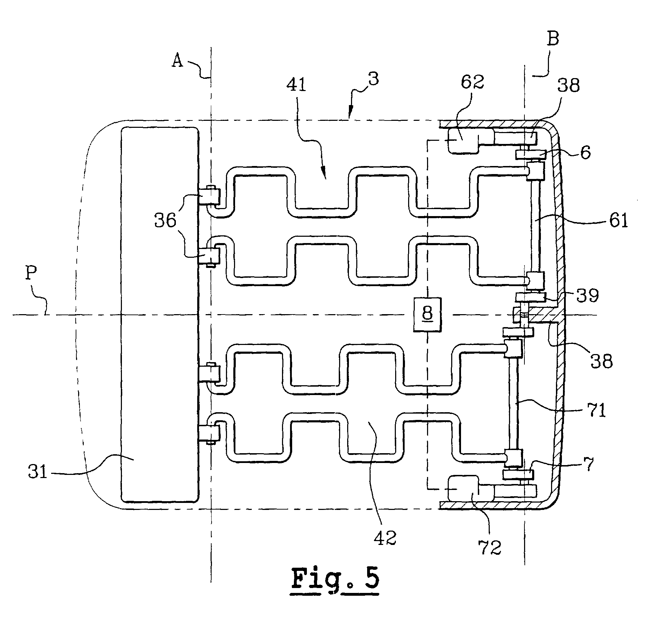

- la figure 5 est une vue de dessus des demi-nappes de suspension, montrant le déphasage entre les deux vilebrequins lors du fonctionnement du système.

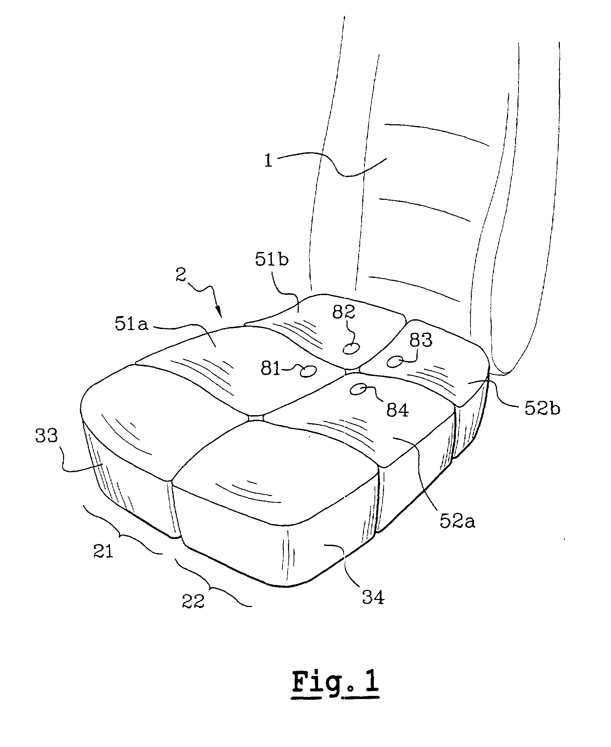

Le siège représenté figure 1 comporte un dossier 1 et une assise 2 dont la partie apparente est constituée de deux parties, une demi-assise droite 21 et une demi-assise gauche 22, séparées par un plan médian vertical longitudinal P.

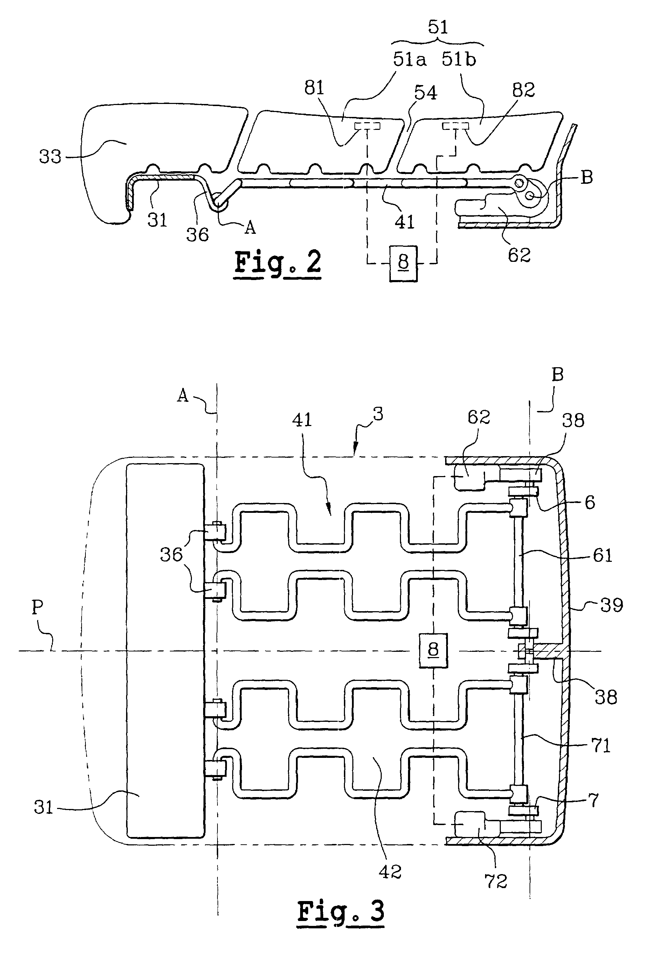

L'assise comporte une armature d'assise formant un cadre 3, représenté schématiquement sur les figures 2 et 3, l'avant de ce cadre portant une plaque de support 31 d'un nez d'assise 32. Le nez d'assise comporte deux éléments de matelassure 33, 34.

Le reste de l'assise, entre le nez et le dossier, comporte une nappe de suspension formée de deux demi-nappes 41, 42, chaque demi-nappe supportant une demi-matelassure 51, 52 respective, chaque demi-matelassure étant elle-même préférentiellement formée de plusieurs éléments de matelassure, deux éléments 51a, 51b ;52a, 52b, dans l'exemple représenté sur les dessins.

Chaque demi-nappe demi-est formée d'un ensemble de fils pliés en créneaux alternés, pour conférer à la nappe, de manière connue en soi, une capacité de déformation élastique. L'avant de chaque demi-nappe est lié à des pattes de fixation 36 solidaires du cadre d'armature, par exemple reliées à la plaque 31 de support de nez d'assise. La liaison entre l'avant des demi-nappes et le cadre d'armature est telle que les deux demi-nappes sont en quelque sorte articulées par rapport au dit cadre autour d'un axe commun A.

L'arrière de chaque demi-nappe est monté tourillonnante sur une manivelle 61, 71 d'un vilebrequin 6, 7. Chaque vilebrequin 6, 7 est monté tournant dans des paliers 38 fixés sur une partie arrière 39 du cadre de l'armature, et entraîné en rotation par un moteur spécifique 62, 72, autour d'un axe de rotation commun B

Les éléments de matelassure 51a, 51b d'une même demi-matelassure peuvent être indépendants, séparés par des fentes transversales 54 sur toute leur épaisseur, comme représenté à la figure 2, ou reliés entre eux avec des fentes transversales réalisées sur une partie seulement de leur épaisseur, dans la mesure ou le matériau de la matelassure est suffisamment souple pour accepter des élongations cycliques sans se détériorer. De manière similaire, les éléments de matelassures 51a, 52a pourrait aussi être reliés aux matelassures 33, 34 du nez d'assise.

L'assise comporte encore des capteurs de pression 81 à 84 pour mesurer en différents endroits la pression exercée par le postérieur 9 de l'occupant. Comme représenté figure 1, un capteur peut être placé dans chaque élément de matelassure. Les capteurs sont reliés par exemple à des moyens de contrôle 8 comportant des moyens de mémorisation de valeurs de la pression ou d'un écart de pression, des moyens de comparaison des valeurs mesurées par les capteurs avec les valeurs mémorisées et des moyens de pilotage et d'asservissement des moteurs 62, 72.

En position de repos, c'est-à-dire à l'arrêt des moteurs 62, 72, ceux-ci sont pilotés de manière que leurs manivelles soient immobilisées dans la même position angulaire, comme représenté figure 3.

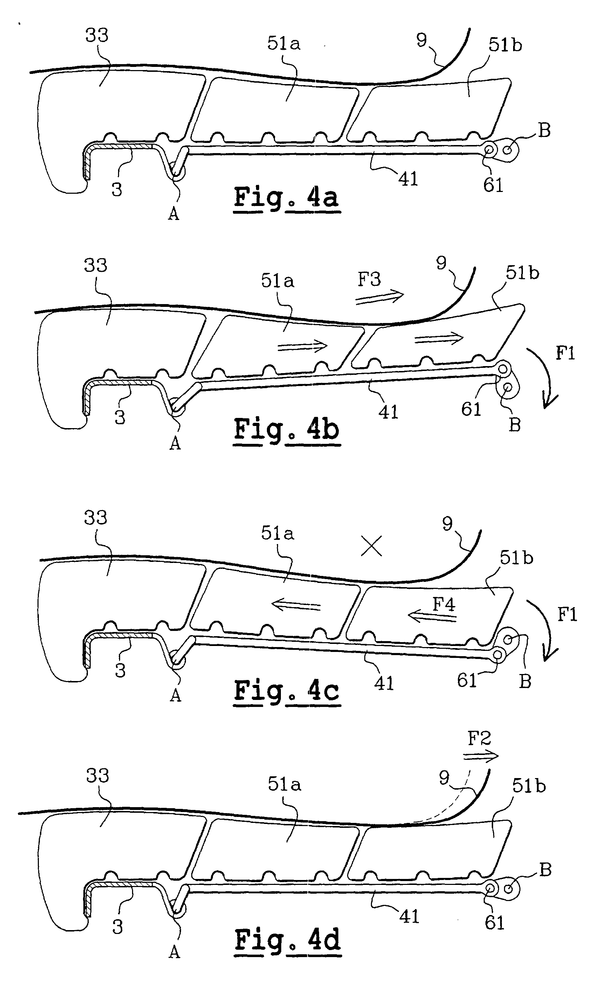

Lorsque les capteurs de pression détectent une dérive vers l'avant du bassin de l'utilisateur, le boîtier de contrôle commande la mise en route des moteurs, de manière à créer dans un premier temps un déphasage angulaire de 180°, puis poursuivre la rotation en conservant ce déphasage. Le mouvement de chaque demi-assise qui en résulte est représenté sur les figures 4a à 4d pour par exemple la partie droite de l'assise, étant entendu que la partie gauche effectue un mouvement identique, mais décalé dans le temps d'une durée correspondant à un demi-tour des vilebrequins.

A partir de la position illustrée à la figure 4a, le vilebrequin 6 tournant dans le sens de la flèche F1 soulève la demi-nappe 41 située du côté droit et déplace son ancrage arrière vers l'arrière, allongeant élastiquement la demi-nappe. La matelassure, en suivant ce mouvement, soulève le côté droit du postérieur, augmente la pression sous celui-ci et l'entraîne vers l'arrière, selon la flèche F3, alors que simultanément la pression est relâchée du côté gauche où la demi-nappe est abaissée et peut donc se rétrécir avec un mouvement vers l'avant sans tendre à déplacer le côté gauche du postérieur.

Le mouvement se poursuit comme indiqué figure 4c par un abaissement de la demi-nappe après avoir atteint le point d'élongation maximale, et un déplacement vers l'avant selon les flèches F4, en laissant le côté droit du postérieur sensiblement immobile ou avec un déplacement réduit vers l'avant, alors que le côté gauche effectue le mouvement vers le haut et vers l'arrière indiqué précédemment, entraînant le côté gauche du postérieur vers l'arrière.

Par la combinaison cyclique des mouvements des deux parties de l'assise il se produit un effet de déplacement global du bassin vers l'arrière illustré par la flèche F2 de la figure 4d, ainsi qu'un léger déhanchement gauche-droite et un effet de massage ascendant sous les cuisses.

L'arrêt des moteurs et leur retour dans la position de repos est commandé dès que les capteurs de pression signalent au boîtier de contrôle que l'équilibre entre les pressions des différents capteurs est retrouvé.

Lorsque les capteurs détectent que le siège n'est plus occupé, ils commandent le retour des vilebrequins dans la position de repos, vers l'avant du siège. Lorsqu'ils détectent la présence d'un nouvel occupant, ils commandent un demi-cycle amenant simultanément les deux parties de l'assise vers l'arrière, pour positionner l'occupant au mieux, comme indiqué précédemment.

L'invention n'est pas limitée au mode de réalisation qui vient d'être décrit uniquement à titre d'exemple. En particulier :
- d'autres formes de réalisation pourront être utilisées pour les demi-nappes de suspension, comme cela est connu, dans la mesure où leur capacité de déformation élastique est suffisante.
- les formes, nombres et dispositions relatives des éléments de matelassure pourront aussi être modifiées en fonction des autres contraintes de réalisation du siège.
- la nappe de suspension pourra aussi être réalisée sous forme d'un filet déformable élastiquement, en deux parties, ou d'une seule pièce mais ayant alors une capacité de déformation de nature à permettre les mouvements séparés de chaque demi-nappe. Un tel filet pourra constituer lui-même la surface d'assise, sans être recouvert par une matelassure.
- des moyens de commande autre que les vilebrequins rotatifs précédemment décrits pourront aussi être utilisés, par exemple un système des vérins pilotés pour réaliser les cycles de déplacements selon l'invention.

## Revendications

1. Assise de siège, notamment pour un véhicule automobile, comportant un cadre (3) d'armature portant une nappe de suspension, et des moyens pour créer des mouvements oscillatoires au niveau de l'assise, **caractérisée en ce que** la nappe de suspension est réalisée en deux parties (41, 42) séparées au niveau d'un plan vertical médian (P) séparant le siège en un côté droit et un côté gauche, chaque partie (41, 42) de la nappe étant reliée à des moyens spécifiques (6, 7) de génération dans chaque partie de la nappe d'un mouvement cyclique comportant, dans une partie supérieure de sa course, une translation vers l'arrière, et **en ce qu'**elle comporte des moyens de commande (8 ; 62, 72) pour générer les dits mouvements avec un déphasage angulaire entre les deux parties.

2. Assise de siège selon la revendication 1, **caractérisée en ce que** le mouvement cyclique est un mouvement de translation sensiblement circulaire autour d'un axe (B) horizontal transversal commun aux moyens de générations dudit mouvement dans chaque partie de la nappe, le sens de rotation étant tel que, pendant la partie supérieure de la course, le déplacement s'effectue vers l'arrière.

3. Assise de siège selon la revendication 1 ou 2, **caractérisée en ce que** chaque partie (41, 42) de la nappe est déformable élastiquement dans la direction longitudinale, les deux parties de nappe étant fixées à l'avant sur une même ligne (A) fixe par rapport au cadre d'armature (3), et à l'arrière sur des vilebrequins (6, 7) respectifs entraînés en rotation de manière à maintenir lors du mouvement un déphasage angulaire de 180°.

4. Assise de siège selon la revendication 3, **caractérisée en ce que** les vilebrequins sont entraînés par des moteurs indépendants (62, 72) asservis pour maintenir lors du mouvement le dit déphasage angulaire.

5. Assise de siège selon la revendication 1, **caractérisée en ce qu'**à l'arrêt les moyens (6, 7) de génération du mouvement cyclique sont maintenus dans la même position angulaire pour que la partie gauche et la partie droite des nappes soient dans le même plan et vers l'avant.

6. Assise de siège selon la revendication 5, **caractérisée en ce qu'**elle comprend des moyens pour, lorsqu'un passager occupe à nouveau le siège, commander une étape préliminaire de positionnement, au cours de laquelle les deux parties de l'assise sont entraînées simultanément vers l'arrière.

7. Assise de siège selon la revendication 1, **caractérisée en ce qu'**elle comporte une matelassure en deux parties (51, 52) recouvrant chacune une partie de la nappe, et chaque partie (51, 52) de la matelassure comporte des fentes transversales (54).

8. Assise de siège selon la revendication 1, **caractérisée en ce qu'**elle comporte un revêtement d'aspect procurant une adhérence plus forte lorsqu'il est déplacé vers l'arrière que lorsqu'il est déplacé vers l'avant.

9. Assise de siège selon la revendication 1, **caractérisée en ce qu'**elle comporte des capteurs de pression (81, 82, 83, 84) situés sous la surface de l'assise.

10. Assise de siège selon la revendication 9, **caractérisée en ce que** les capteurs de pression (81, 82, 83, 84) sont disposés de manière à pouvoir mesurer la pression exercée sur la surface d'assise en au moins deux points situés l'un devant l'autre.

11. Assise de siège selon la revendication 10, **caractérisée en ce qu'**elle comporte des moyens (8) de mémorisation de valeurs de la pression ou d'un écart de pression, et des moyens de comparaison des valeurs mesurées par les capteurs avec les valeurs mémorisées.

## Patentansprüche

1. Sitzfläche, insbesondere für ein Kraftfahrzeug, mit einem Rahmengestell (3), das eine Auflage zur Federung trägt, und mit Mitteln zum Erzeugen oszillierender Bewegungen an der Sitzfläche, **dadurch gekennzeichnet, dass** die Federungsauflage aus zwei Abschnitten (41, 42) besteht, die durch eine vertikale Mittelebene (P), die den Sitz in eine rechte und eine linke Seite teilt, voneinander getrennt sind, wobei jeder Abschnitt (41, 42) der Auflage mit Mitteln (6, 7) zum Erzeugen einer zyklischen Bewegung in jedem Abschnitt der Auflage verbunden ist, zu der in einem oberen Abschnitt ihres Laufs eine Translationsbewegung nach hinten gehört, und dadurch, dass die Sitzfläche Steuermittel (8; 62, 72) zum Erzeugen dieser Bewegungen mit einer Winkelverschiebung zwischen den beiden Abschnitten aufweist.

2. Sitzfläche nach Anspruch 1, **dadurch gekennzeichnet, dass** die zyklische Bewegung im Wesentlichen eine kreisförmige Translationsbewegung um eine horizontale Querachse (B) ist, die den Mitteln zum Erzeugen der Bewegung in jedem Abschnitt der Auflage gemeinsam ist, wobei die Drehrichtung so ist, dass im oberen Abschnitt des Laufs eine Verschiebung nach hinten erfolgt.

3. Sitzfläche nach Anspruch 1 oder 2, **dadurch gekennzeichnet, dass** jeder Abschnitt (41, 42) der Auflage elastisch in Längsrichtung verformbar ist, wobei die beiden Abschnitte der Auflage vorne an derselben, gegenüber dem Rahmengestell (3) festen Linie (A) und hinten an Kurbelwellen (6, 7) befestigt sind, die derart drehangetrieben werden, dass sie bei der Bewegung eine Winkelverschiebung um 180° aufrechterhalten.

4. Sitzfläche nach Anspruch 3, **dadurch gekennzeichnet, dass** die Kurbelwellen von unabhängigen Motoren (62, 72) angetrieben werden, die so gesteuert werden, dass bei der Bewegung die Winkelverschiebung beibehalten wird.

5. Sitzfläche nach Anspruch 1, **dadurch gekennzeichnet, dass** die Mittel (6, 7) zum Erzeugen der zyklischen Bewegung beim Stillstand in der gleichen Winkelposition gehalten werden, damit der linke und der rechte Abschnitt der Auflage in der gleichen Ebene und an der Vorderseite liegen.

6. Sitzfläche nach Anspruch 5, **dadurch gekennzeichnet, dass** es Mittel umfasst, die, wenn ein Fahrgast wieder auf dem Sitz Platz nimmt, einen vorbereitenden Positionierungsvorgang steuern, bei dem die beiden Abschnitte der Sitzfläche gleichzeitig nach hinten bewegt werden.

7. Sitzfläche nach Anspruch 1, **dadurch gekennzeichnet, dass** sie eine Polsterung aus zwei Teilen (51, 52) aufweist, die jeweils einen Abschnitt der Auflage bedecken, und dass jeder Teil (51, 52) der Polsterung Querschlitze (54) aufweist.

8. Sitzfläche nach Anspruch 1, **dadurch gekennzeichnet, dass** sie einen Sichtüberzug aufweist, der für eine stärkere Haftung sorgt, wenn er nach hinten verschoben wird, als wenn er nach vorne verschoben wird.

9. Sitzfläche nach Anspruch 1, **dadurch gekennzeichnet, dass** sie unter ihrer Oberfläche Druckfühler (81, 82, 83, 84) aufweist.

10. Sitzfläche nach Anspruch 9, **dadurch gekennzeichnet, dass** die Druckfühler (81, 82, 83, 84) so angeordnet sind, dass sie an mindestens zwei hintereinander gelegenen Punkten den Druck messen können, der auf die Oberfläche der Sitzfläche ausgeübt wird.

11. Sitzfläche nach Anspruch 10, **dadurch gekennzeichnet, dass** sie Mittel (8) zum Speichern der Druckwerte oder einer Druckabweichung sowie Mittel zum Vergleichen der von den Fühlern gemessenen mit den gespeicherten Werten aufweist.

## Claims

1. Seat pan, for an automobile vehicle in particular, including a frame (3) carrying a suspension lattice, and means for creating oscillatory movements in the seat pan, **characterized in that** the suspension lattice is made in two sections (41, 42) separated in a vertical median plane (P) dividing the seat into a RH side and a LH side, each section (41, 42) of the lattice being connected to specific means (6, 7) for generating in each section of the lattice a cyclic movement including in the upper portion of its travel a rearward movement of translation, and **in that** it includes control means (8; 62, 72) for generating said movements with an angular phase difference between the two sections.

2. Seat pan in accordance with claim 1, **characterized in that** the cyclic movement is a more or less circular movement of translation around a horizontal transverse axis (B) common to the means of generating the said movement in each section of the lattice, with the direction of rotation being such that during the upper portion of the travel, the displacement is in the rearward direction.

3. Seat pan in accordance with claim 1 or 2, **characterized in that** each section (41, 42) of the lattice is elastically deformable in the longitudinal direction, the two sections of the lattice being attached at the front on a same line (A) that is fixed with respect to the reinforcing frame (3), and fixed at the rear to crankshafts (6, 7) rotated such that an angular phase difference of 180° is maintained during the movement.

4. Seat pan in accordance with claim 3, **characterized in that** the crankshafts are driven by independent motors (62, 72) slaved to maintain the said angular phase difference during the movement.

5. Seat pan in accordance with claim 1, **characterized in that** when stopped, the means (6, 7) for generating the cyclic movement are maintained in the same angular position so that the LH section and the RH section of the lattices are in the same plane and in the forward position.

6. Seat pan in accordance with claim 5, **characterized in that** it includes means for initiating a preliminary positioning phase when a passenger gets into the seat, during which the two sections of the seat are driven simultaneously rearwards.

7. Seat pan in accordance with claim 1, **characterized in that** it includes padding in two parts (51, 52), each part covering one section of the lattice, and each part (51, 52) of the padding featuring transverse slits (54).

8. Seat pan in accordance with claim 1, **characterized in that** it features an external covering that gives greater adherence when it is moved rearwards than when it is moved forwards.

9. Seat pan in accordance with claim 1, **characterized in that** it incorporates pressure sensors (81, 82, 83, 84) under the surface of the seat pan.

10. Seat pan in accordance with claim 9, **characterized in that** the pressure sensors (81, 82, 83, 84) are positioned such that they can measure the pressure exerted on the seat pan surface at a minimum of two points situated one in front of the other.

11. Seat pan in accordance with claim 10, **characterized in that** it incorporates means (8) for storing the values of the pressure or a pressure differential, and means of comparing the values measured by the sensors with the stored values.
